# EUROPÄISCHE PATENTANMELDUNG

(11) **EP 0 832 852 A2**
(43) Veröffentlichungstag der Anmeldung: **01.04.1998**
(21) Anmeldenummer: 97116376.1
(22) Anmeldetag: 19.09.1997
(51) Int. Cl.: C02F 1/72

(54) **Verfahren zum Abbau von Schadstoffen**

(30) Priorität: 30.09.1996 DE 19640226; 20.12.1996 DE 19653426
(71) Anmelder: Peroxid-Chemie GmbH, 82049 Pullach (DE)
(72) Erfinder: Meichelböck, Wilfried, 82152 Krailling (DE); Gutewort, Sven, Dr., 80939 München (DE); Gnann, Michael, Dr., 82049 Grosshesselohe (DE)
(74) Vertreter: Huber, Bernhard, Dipl.-Chem.

(57) **Zusammenfassung**

Zum Abbau von Schadstoffen in Abwässern, Prozeßlösungen und Trinkwasser unter Verwendung von Persulfat wird der Abbau bei mindestens 130 °C, vorzugweise 130 bis 140 °C und einem Druck größer als 1 bar durchgeführt. Zur Durchführung des Verfahrens eignet sich eine Einrichtung mit einem ersten Behälterteil zur Aufnahme der wässrigen Lösung, welcher einen Einlauf und einen Auslauf aufweist und einen Reaktionsraum bildet, wobei eine Heizvorrichtung zum Beheizen der wässrigen Lösung vorgesehen ist, wobei weiter Wärmeübergangsmittel vorgesehen sind, die einen Wärmeübergang zwischen der Heizvorrichtung und der wässrigen Lösung gestatten, und wobei wenigstens ein Druckerzeugungsmittel vorgesehen ist.

## Beschreibung

Die Erfindung betrifft ein Verfahren zum Abbau von Schadstoffen aus Abwässern, Prozeßlösungen und Trinkwasser unter Verwendung von Persulfat.

Das Spektrum anthropogener Schadstoffe in wässrigen Lösungen ist breit gefächert. Es gibt daher eine ganze Reihe von Verfahren, die sich mit der Aufbereitung von wässrigen Lösungen befassen. Dabei sollen vor allem Organohalogenverbindungen, organischer Kohlenstoff und CSB-Konzentrationen aus industriellen und kommunalen Abwässern oder chemischen, pharmazeutischen oder galvanischen Prozeßlösungen entfernt werden. Ein weiteres Ziel ist die Oxidation von Umweltgiften wie CN⁻, Schwermetallcyanidkomplexen, NH₄⁺ und H₂S. Weiterhin wird die Desodorierung sowie Entfärbung von Abwässern angestrebt.

Der sog. TOC (total organic carbon = Gesamtkohlenstoffgehalt) als Summenparameter für organische Substanzen darf dabei in den genannten Lösungen nicht zu hoch sein. Die Grenzwerte für den TOC sind so gefaßt, daß sie verhindern, daß sich chemisch-physikalische Parameter z.B. der betroffenen natürlichen Oberflächengewässer so stark verändern, daß deren Ökosystem gravierend verändert wird. So bewirkt beispielsweise ein hoher Anteil an oxidierbaren Stoffen die Absenkung der im Wasser vorhandenen Sauerstoffkonzentration und damit das Absterben von aerob lebenden Organismen. (CSB-Wert)

In der Technik werden als starke Oxidationsmittel zum Schadstoffabbau vor allem Wasserstoffperoxid und Ozon eingesetzt; unter geeigneten Voraussetzungen ist auch der eher reaktionsträge Sauerstoff möglich. In einigen Fällen kann auch heute noch nicht auf Mittel auf Chlorbasis (Hypochlorit, Chlordioxid, Chlorit) verzichtet werden - trotz der damit verbundenen Probleme, d.h. Entstehung toxischer chlororganischer Verbindungen.

Es gibt außerdem Verfahren, die unter hohen Drücken (220,6 bar) und Temperaturen (374 °C) mit überkritischem Wasser Schadstoff abbauen. Diese Naßoxidation bedarf aber eines extremen Aufwands hinsichtlich des Materials, der Energie und auch der Kosten.

Eines der stärksten bekannten Oxidationsmittel ist Peroxodisulfat mit einem Standard-Redoxpotential von Eₒ = 2.06 V. Aufgrund dieses hohen Oxidationspotentials kann Peroxodisulfat nahezu jede organische Substanz vollständig zu Kohlendioxid und Wasser (sowie gegebenenfalls Phosphat, Nitrat usw.) oxidieren. In seiner Reaktivität weist Peroxodisulfat einige Besonderheiten gegenüber anderen Oxidationsmitteln auf: im Gegensatz zu Wasserstoffperoxid und Ozon ist Peroxodisulfat besonders reaktionsträge und im festen Zustand über lange Zeit stabil. Häufig finden Reaktionen erst durch Aktivierung mit Katalysatoren oder nach Erhöhung der Reaktionstemperatur statt.

Bislang wird Peroxodisulfat neben technischen Anwendungen in der Galvanik- und Leiterplattenindustrie und als Radikalstarter für Polymerisationen auch in der Analytik zur Bestimmung des DOC (dissolved Organic Carbon = gelöster organischer Kohlenstoff) bzw. TOC eingesetzt sowie als Reagens in verschiedenen Synthesen.

Gegenüber den in der Abwasserreinigung seit langem eingesetzten Stoffen wie Ozon, das in seiner Herstellung teuer und aufgrund seiner Giftigkeit kompliziert zu handhaben ist, und Wasserstoffperoxid, das u.U. in alkalischen schwermetallhaltigen Lösungen einem explosionsartigen Zerfall unterliegen kann, nur eine geringe Beständigkeit in den zu behandelnden Lösungen und eine oft nicht ausreichend große Oxidationswirkung (Redoxpotential + 1,77 V) aufweist, ist das Arbeiten mit Peroxodisulfaten vergleichsweise unproblematisch; sie sind gut zu handhaben und in festem Zustand über lange Zeit stabil. Mit Peroxodisulfaten lassen sich daher auch ansonsten nur schwer abbaubare Schadstoffe oxidativ zerstören. Die bei Umsetzungen mit Peroxodisulfat entstehenden Sulfate sind ungiftig.

Ein weiteres Problem sind die in den genannten wässrigen Lösungen neben den TOC vorliegenden halogenorganischen Verbindungen (AOX adsorbierbares organisches Halogen). Der AOX-Abbau erfolgt parallel zum oder dem TOC-Abbau nachgeschaltet, was bedeutet, daß mitunter ein unvertretbar hoher Peroxodisulfateinsatz erforderlich ist, um die toxischen Substanzen in ausreichendem Maßstab abzubauen.

Von besonders großem Nachteil ist, daß bei Anwesenheit von Chloriden in den zu behandelnden wässrigen Lösungen bei Verwendung von Peroxodisulfat als Oxidationsmittel chlororganische Verbindungen gebildet werden. Bei höheren erforderlichen Konzentrationen an Peroxodisulfaten kann es darüber hinaus bei Anwesenheit von Chloriden sogar zu Chloremissionen kommen.

Aus der DE 44 30 391 ist ein bereits erfolgreich eingesetztes Verfahren zum Abbau von Schadstoffen in Prozeßlösungen, Abwässern und Trinkwasser bekannt, das mit Peroxodisulfaten als Oxidationsmittel arbeitet. Bei diesem Verfahren wird den wässrigen Lösungen ein Gemisch von Peroxodisulfaten mit Alkalien, im äquimolaren Verhältnis von 1 : 0,5 bis 1 : 2, vorzugsweise 1 : 1, zugesetzt. Gegebenenfalls werden Aktivatoren bzw. Katalysatoren zugesetzt und/oder mittels UV-Licht, Mikrowelle oder Ultraschall aktiviert. Die Reaktionstemperatur liegt zwischen 20 und 120 °C, besonders bevorzugt bei 80 °C. Es wird im alkalischen Medium, d.h. unter Aufrechterhaltung eines pH-Werts deutlich über 7 durch Zugabe von entsprechender Menge an Basen bereits zu Beginn des Verfahrens, gearbeitet. Nach ca. 180 min. kann eine Totalumsetzung des TOC erwartet werden. Die lange Behandlungszeit erfordert große Behälter und Apparaturen, die aus einem sehr widerstandsfähigen Material, wie Hastelloy-Legierungen, Tantal, Teflon o. dgl. bestehen müssen, da die Reaktion in einem sehr aggressiven Milieu stattfindet. Insbesondere bei der Anwesenheit von Halogenen ergeben sich Korrosionsprobleme bei minderwertigen Werkstoffen.

Bei der Reaktion des Peroxodisulfats mit einer zu oxidierenden Substanz wird grundsätzlich Schwefelsäure gebildet. Diese Säurebildung ist ein wesentlicher Nachteil einer Oxidation von Schadstoffen mit Peroxodisulfaten in Abwässern, Prozeßlösungen und Trinkwasser, da sich hierdurch der pH in den sauren Bereich verschiebt. Damit könnte sich die Notwendigkeit einer nachgeschalteten Neutralisationsstufe ergeben, in der der Ausgangs- oder der gewünschte pH-Wert wieder eingestellt wird. Die oben genannte Druckschrift löst dieses Problem dadurch, daß die wässrigen Lösungen bereits zu Beginn der Behandlung mit einer größeren Menge Lauge versetzt werden, die die Bildung der Schwefelsäure auffangen kann.

Ausgehend von diesem Stand der Technik ist es die Aufgabe der vorliegenden Erfindung ein Verfahren zum Abbau von Schadstoffen in Abwässern, Prozeßlösungen und Trinkwasser anzugeben, das Persulfat als Oxidationsmittel verwendet und durch das die erforderlichen Behandlungszeiten drastisch verringert werden, wobei gleichzeitig die Möglichkeit geschaffen wird, mit wesentlich kleineren und damit billigeren Apparaturen auszukommen und dabei auch zu einem kontinuierlichen Verfahren zu gelangen.

Dieses Problem wird dadurch gelöst, daß der Schadstoffabbau mit Persulfat bei mindestens 130 °C, vorzugsweise 130 bis 140 °C und einem Druck größer als 1 bar durchgeführt wird, wobei die grundlegende Reaktion die Zersetzung von Persulfat in OH- und SO₄-Radikale ist.

Der einzustellende pH-Bereich kann je nach Problemlösung zwischen 0 und 14 liegen und deckt somit den gesamten pH-Bereich ab, anders als bei früheren Systemen, die auf das Arbeiten in einem bestimmten, meist alkalischen pH-Bereich angewiesen waren.

Die Temperatur ist dabei noch nicht so hoch, daß sie aufwendige Apparaturen notwendig machen würde, wie es bei einigen Verfahren notwendig ist, die bei Temperaturen über 300 °C arbeiten.

An sich ist bei chemischen Reaktionen natürlich zu erwarten, daß die Reaktionszeiten sich bei steigenden Temperaturen verkürzen. Im vorliegenden Fall ist jedoch zu berücksichtigen, daß die Persulfate bei höheren Temperaturen sehr leicht zersetzliche Substanzen sind. Bei höherer Temperatur nimmt die Zersetzungsgeschwindigkeit normalerweise bei peroxidischen Verbindungen rascher zu als die Reaktionsgeschwindigkeit der jeweils zu katalysierenden Reaktionen. Daher wäre die Reaktion der Radikale untereinander bei zunehmender Temperatur wahrscheinlicher.

Die Zersetzung von 0.01 Mol/l Kaliumperoxodisulfat in 0.1 Mol NaOH bei steigender Temperatur ist in der folgenden Tabelle zusammengefaßt:

**Tabelle 1**

| | Ko (min⁻¹) mmol/l | |
|---|---|---|
| 50 °C | 6 x 10⁻⁵ | 0,00006 mol/min |
| 60 °C | 3 x 10⁻⁴ | 0,0003 mol/min |
| 70 °C | 1,4 x 10⁻³ | 0,0014 mol/min |
| 80 °C | 5,5 x 10⁻³ | 0,0055 mol/min |
| 90 °C | 2,1 x 10⁻² | 0,021 mol/min |
| (nach Kolthoff/Miller) | | |
| 100 °C | 8 x 10⁻² | 0,0798 mol/min |
| 110 °C | 3 x 10⁻¹ | 0,303 mol/min |
| 120 °C | | 1,151 mol/min |
| 130 °C | | 4,37 mol/min |
| (theoretisch) | | |

Es hätte daher nur eine Verschlechterung der Ausbeuten erwartet werden können, da die Selbstzersetzung des Persulfats so schnell vor sich gegangen wäre, daß es nicht mehr mit den zu beseitigenden Schadstoffen hätte reagieren können.

Es ist daher eine wesentliche Erkenntnis der vorliegenden Erfindung, daß tatsächlich die Abbauleistung bei Temperaturen zwischen 130 und 140 °C und einem Überdruck deutlich gesteigert werden konnte. Wie den unten stehenden Beispielen zu entnehmen ist, kann nicht nur der Gesamt-Kohlenstoffgehalt nahezu komplett abgebaut werden, sondern auch die AOX-Werte, d.h. die Werte der adsorbierbaren, organisch gebundenen Halogene können auf beinahe 0 abgesenkt werden. Abgesehen davon können gemäß der vorliegenden Erfindung auch andere Verunreinigungen in wässrigen Lösungen abgebaut werden, so z.B. Farbstoffe und Cyanide. Auch eine Dekomplexierung toxischer Substanzen ist möglich.

Durch die vorliegende Erfindung gemäß Anspruch 1 können Abwässer, Prozeßflüssigkeiten und Trinkwasser gereinigt, entfärbt und desodoriert werden mit einem im Vergleich zu den herkömmlichen Oxidationsmitteln Ozon, Wasserstoffperoxid oder auch Sauerstoff einfach zu handhabenden Oxidationsmittel, nämlich dem Persulfat, das zudem ein besonders hohes Oxidationspotential und somit eine besonders hohe Wirksamkeit in der Oxidation aufweist.

Die vorliegende Erfindung ermöglicht es außerdem, das Verfahren kontinuierlich zu fahren. Hierfür wird ein Conti-Reaktortyp vorgeschlagen, bei dem das einlaufende, unbehandelte und kalte Abwasser durch das auslaufende, behandelte und demnach warme Abwassser im Gegenstrom vorerhitzt wird, so daß die Energiekosten minimiert werden. Dabei sollte eine Verweilzeit von ca. 100 sec. bei 130 °C gewährleistet sein, um die Reaktorgröße in Proportion zum behandelten Abwasser möglichst gering zu halten. Durch exotherme Reaktionen, wie z.B. die Oxidation von Kohlenwasserstoffen zu Kohlendioxid und Wasser bekommt das System einen zusätzlichen Wärmeeintrag, was sich wiederum positiv auf die Energiekosten auswirkt. Als Wärmeträger kommen Dampf, Abwärme z.B. heiße Gase, organischer Wärmeträger sowie eine Widerstandbeheizung in Frage.

Es können im Reaktionsraum Einbauten vorgesehen sein, die einen besseren Wärmeübergang zur Reaktorwand garantieren und gleichzeitig eine unerwünschte vertikale Quervermischung verhindern. Diese Einbauten sollten so gestaltet sein, daß sie eventuell entstehendes Gas nach oben frei entweichen lassen können. Da die Einbauten möglichst einen guten Wärmeübergang aufweisen sollten, können sie als gerade Rohre, Rohrschlangen oder Platten ausgeführt sein, aber auch eine einfache Schüttung mit keramischen Raschigringen ist möglich.

Um einen Überdruck im Reaktor aufzubauen, sollte vor dem Abwasserauslauf ein Überströmventil eingebaut sein, das je nach gewünschtem Reaktordruck auf einen bestimmten Ablaßdruck eingestellt werden kann. Durch die Bildung von Gasen würde der Reaktor allmählich leergedrückt werden und die Verweilzeit würde sich verkürzen. Für diesen Fall kann im oberen Teil des Reaktorkopfes ein Grenzstanddetektor montiert sein. Detektiert dieser ein Gasphase, schaltet das dem Gasüberströmventil nachgeschaltete Absperrventil auf und das dem Abwasserauslaufüberströmventil nachgeschaltete Absperrventil gleichzeitig zu. Über das zweite Überströmventil in der Gasleitung entweicht nun so lange Gas, bis der Grenzstanddetektor wieder eine Flüssigphase erfaßt. In diesem Zustand schließt das Gasabsperrventil und öffnet das Abwasserauslaufabsperrventil. Da bei dem Entweichen des Gases ein Druckabfall im Reaktor gegeben sein kann, sollte die Öffnung des Gasabsperrventils zusätzlich auf einen voreingestellten Mindestreaktordruck begrenzt werden.

Das erfindungsgemäße Verfahren ist aber nicht auf die Verwendung in der oben beschriebenen Vorrichtung beschränkt, sondern kann z.B. auch mit einem klassischen Rohrreaktor im Contiverfahren oder in einem normalen Druckbehälter batchweise gefahren werden.

Als aktive Oxidationskomponenten eignen sich Peroxodisulfate, Peroxomonosulfate und Mischungen von Peroxodisulfaten oder Peroxomonosulfaten mit Percarbonaten und Perboraten.

In einer bevorzugten Ausführungsform wird eine Mischung eines Peroxodisulfats mit Wasserstoffperoxid eingesetzt, vorzugsweise in einem molaren Verhältnis von 0,1 bis 2,0 Mol Wasserstoffperoxid pro Mol Peroxodisulfat. Der Zusatz von Wasserstoffperoxid führt zu einer weiteren Beschleunigung des Verfahrens und eröffnet eine Möglichkeit, die eingesetzten Persulfatmengen zu verringern, da das Wasserstoffperoxid und sein Zerfall eine aktivierende Wirkung auf das Oxidationsvermögen des Peroxodisulfats ausüben.

Vorzugsweise wird das Wasserstoffperoxid in Form von Natriumcarbonat-Peroxohydrat eingebracht.

Der Zusatz anderer, bekannter aktiver Oxidationskomponenten zu dem Persulfatsystem ist ebenso denkbar.

In einer weiteren bevorzugten Ausführungsform des Verfahrens gemäß der vorliegenden Erfindung werden 2 - 3 Mol Persulfat pro abzubauendem Mol C bzw. CH₂ eingesetzt. Dies ergibt sich aus folgender Formel:

(CH₂)ₙ + 3n S₂0₈²⁻ + 2n H₂O = n CO₂ + 6n S0₄²⁻ + 6n H⁺

Dadurch ist ein gezielter Mengeneinsatz von Persulfat gegenüber dem abzubauenden Schadstoff möglich.

Gemäß dem vorliegenden Verfahren werden lange Verweilzeiten im Reaktor vermieden, so daß sich der Zeitaufwand für die Behandlung der wässrigen Lösungen drastisch verringert. Auf diese Weise können außerdem kleinere Behälter als die üblichen eingesetzt werden, was wiederum zu einer Verringerung der Materialkosten führt, da die Reaktionen in einem sehr aggressiven Milieu ablaufen und die notwendigen Behälter und Apparaturen demnach aus sehr widerstandsfähigen Materialien bestehen müssen. Durch die Erfindung wird also sowohl eine Zeitersparnis als auch eine deutliche Verringerung der Kosten erreicht, wobei gleichzeitig eine hohe Oxidationsleistung garantiert wird.

Die bevorzugten Verweilzeiten gemäß der vorliegenden Erfindung liegen bei einer bevorzugten Ausführungsform zwischen 30 und 500 sec., bei einer sehr bevorzugten Ausführungsform zwischen 80 und 300 sec. und bei der besonders bevorzugten Ausführungsform bei etwa 100 sec.

Die bevorzugten Verweilzeiten gewährleisten einen beinahe 100 %-igen Abbau der Verunreinigungen in den genannten wässrigen Lösungen.

Das Verfahren gemäß der vorliegenden Erfindung kann bei jedem Druck gefahren werden, der größer ist als 1 bar, d.h. auch bei sehr niedrigen Drücken kann das Verfahren betrieben werden. Normalerweise wird der Druck so gewählt, daß bei der angewendeten Temperatur das Sieden der Flüssigkeit unterdrückt wird.

Durch die kurzen Verweilzeiten im Reaktor und eine daraus resultierende günstige Regelstrecke ist es bei dem erfindungsgemäßen Verfahren möglich, am Abwasserauslauf hinter der Druckstufe ein pH-Wert-Messung zu installieren, die je nach gewünschtem Endauslauf-pH-Wert eine Laugenzudosierung für das einlaufende Abwasser ansteuert. Dies ist manchmal durchaus sinnvoll, da der pH-Wert des Abwassers durch das sich in Schwefelsäure zersetzende Persulfat schnell in den manchmal nicht gewünschten sauren Bereich abfällt.

Da die Zersetzungsgeschwindigkeit des Persulfats bei sinkendem pH-Wert zunimmt und sich dadurch noch geringere Verweilzeiten im Reaktor realisieren lassen, ist es auch sinnvoll, den pH-Wert im Reaktor auf einem leicht alkalischen Niveau zu halten. Dies kann verwirklicht werden, indem z.B. mehrere Laugen-Zudosierungen im Reaktionsbereich installiert werden. Dadurch wird der pH-Wert in einem engen pH-Fenster gehalten.

Als zugesetzte Laugen sind die Hydroxide, Carbonate und/oder Hydrogencarbonate des Natriums oder Kaliums denkbar.

Da Sulfat z.B. wegen Betonkorrosion im Rahmen der Einleiterverordnung für die Einleitung von Abwässern ein problematisches Ion darstellt, wäre aber auch denkbar, Kalkmilch als Lauge zuzusetzen. Kalkmilch würde eine sofortige Fällung des entstehenden Sulfats bewirken.

Um eine weitere Beschleunigung der Abbaureaktionen zu erreichen, sieht eine besondere Ausführungsform des Verfahrens gemäß der Erfindung den Zusatz von Katalysatoren vor.

Als Katalysatoren können hier Zusätze oder Festbettschüttungen von Kohle- oder Graphitpulver bzw. -granulat in Frage kommen oder auch Zusätze oder Festbettschüttungen von Adsorberharzer.

In einer besonders bevorzugten Ausführungsform werden Übergangsmetalle als Katalysator verwendet.

Besonders bevorzugt ist eine Fixierung der Katalysatoren an Aktivkohle.

Eine Beschleunigung der Abbaureaktionen kann auch durch eine gleichzeitige Bestrahlung mit UV, Mikrowelle oder Ultraschall erzielt werden.

Ein weiterer Gegenstand der Erfindung ist eine Vorrichtung zur Durchführung des Verfahrens nach einem der Ansprüche 1 bis 22, umfassend eine Einrichtung zum Abbau von Verunreinigungen in wässrigen Lösungen mittels Persulfat, mit einem ersten Behälterteil zur Aufnahme der wässrigen Lösung, welcher einen Einlauf und einen Auslauf aufweist und einen Reaktionsraum bildet, wobei eine Heizvorrichtung zum Beheizen der wässrigen Lösung vorgesehen ist, wobei weiter Wärmeübergangsmittel vorgesehen sind, die einen Wärmeübergang zwischen der Heizvorrichtung und der wässrigen Lösung gestatten, und wobei wenigstens ein Druckerzeugungsmittel vorgesehen ist.

In der beigefügten Zeichnung stellen dar:
Figur 1 den Abbau verschiedener Schadstoffe in Abhängigkeit von der Verweilzeit im Reaktionsraum.
Figur 2 eine Ausführungsform eines Reaktors zur Durchführung des Verfahrens der Erfindung.
Figur 3 und 4 je noch eine andere Ausführungsform eines Reaktors zur Durchführung des Verfahrens der Erfindung.
Figur 5 den Farbbau eines Lewafix-Farbabwasser. Die Nummern der einzelnen Kurven entsprechen den Versuchsnummern von Beispiel 3.

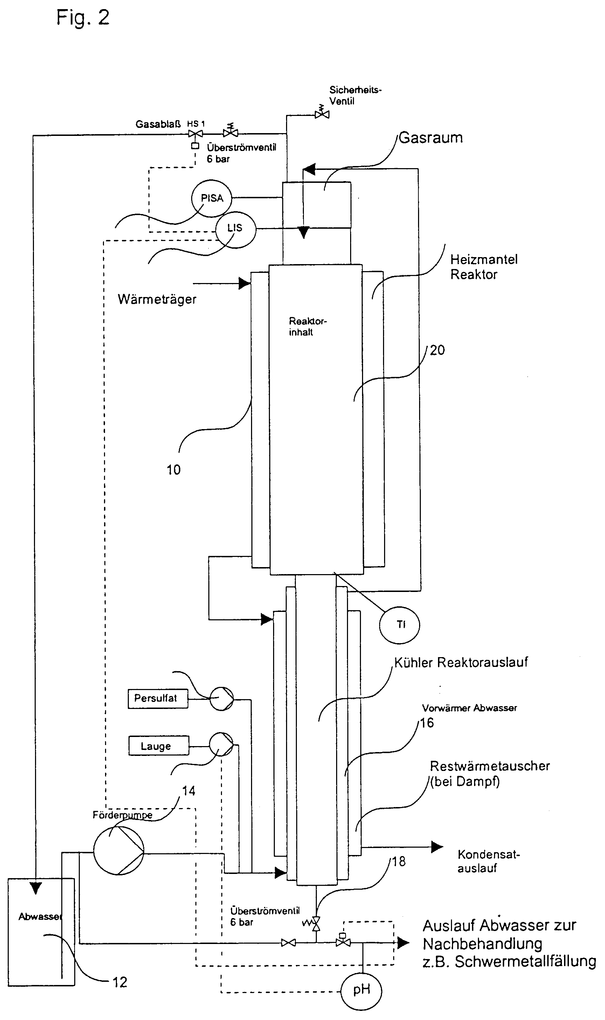

In Figur 2 ist schematisch ein Reaktortyp 10 für das Contiverfahren dargestellt. Das unbehandelte Abwasser 12 wird mit einer Förderpumpe 14 in einen Wärmetauscher 16 gepumpt und wird in diesem in Richtung Reaktorinnenraum gefördert. Während dieser Verweilzeit nimmt das Abwasser 12 die Wärme von dem bereits behandelten heißen Abwasser 18 auf, welches sich gleichzeitig dadurch abkühlt. Das vorerhitzte Abwasser 12 läuft in den Reaktor 20 ein und erhitzt sich dort auf die gewünschte Temperatur. Diese Schaltung garantiert einen sehr geringen Energiebedarf für das Verfahren, so daß auch größere Abwassermengen ohne größeren Energiebedarf bewältigt werden können (Beispiel 4). Durch Einbauten im Reaktor 20 ergibt sich ein besserer Wärmeübergang zur Reaktorwand und gleichzeitig wird eine unerwünschte vertikale Quervermischung verhindert. Die Einbauten sollten so gestaltet sein, daß sie evtl. entstehendes Gas nach oben frei entweichen lassen können. Da die Einbauten möglichst einen guten Wärmeübergang aufweisen sollten, können diese als gerade Rohre, Rohrschlangen, Platten ausgeführt sein, aber auch einfache Schüttungen mit keramischen Raschigringen bringen einen positiven Effekt. Um einen Überdruck im Reaktor aufzubauen ist vor dem Abwasserauslauf ein Überströmventil eingebaut, das je nach gewünschtem Reaktordruck auf einen bestimmten Ablaßdruck eingestellt werden kann. Durch die Bildung von Gasen CO₂/N₂/O₂ würde der Reaktor allmählich leergedrückt werden und die Verweilzeit würde sich verkürzen. Für diesen Fall ist im oberen Teil des Reaktorkopfes ein Grenzstanddetektor montiert. Detektiert dieser eine Gasphase, schaltet das dem Gasüberströmventil nachgeschaltete Absperrventil auf und das dem Abwasserauslaufüberströmventil nachgeschaltete Absperrventil gleichzeitig zu. Über das 2. Überströmventil in der Gasleitung entweicht nun so lange Gas bis der Grenzstanddetektor wieder eine Flüssigphase erfaßt. In diesem Zustand schließt das Gasabsperrventil und öffnet das Abwasserauslaufabsperrventil. Da bei dem Entweichen des Gases ein Druckabfall im Reaktor gegeben sein kann und somit gleichzeitig eine Gasexpansion erfolgt, ist die Öffnung des Gasabsperrventils zusätzlich auf einen voreingestellten Mindestreaktordruck begrenzt. Durch diese Pendelschaltung ist ein einwandfreier Betrieb auch in sehr niedrigen Druckbereichen (z.B. 1 - 6 bar) möglich. Was sich kostengünstig auf die Bauteile für das Verfahren auswirkt. Durch einen optimierten Vorwärmetausch können die Energiekosten weiter minimiert werden, es sind Werte von < 10 KWh/m³ Abwasser bei Verwendung von Plattenwärmetauschern in Beispiel 4 erzielbar.

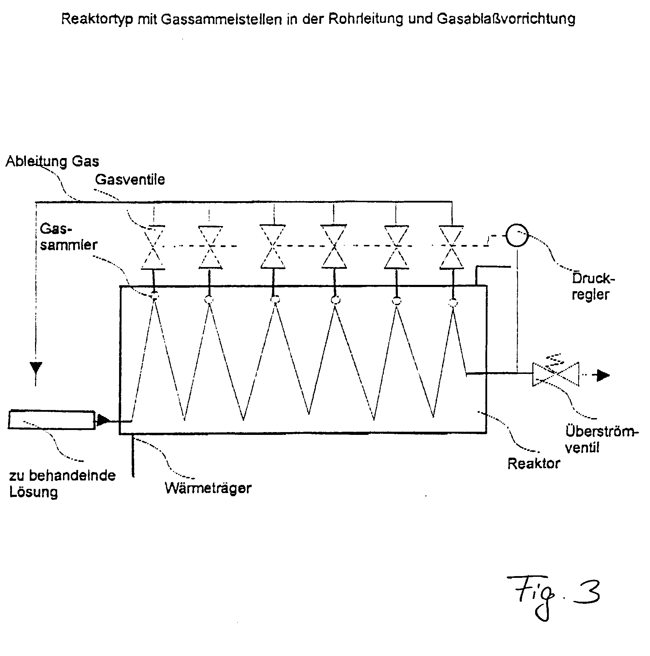

Durch die in Figur 3 gezeigte Reaktoranordnung wird ein Reaktor mit langen und dünnen Rohren verwirklicht, wobei entstehendes Gas in die Gassammler aufsteigt und entweder in Intervallen oder über Füllstandsdetektoren über die Ventile abgelassen wird. Der Druckregler schließt die Ventile wenn der Systemdruck unter einen Grenzwert abfällt.

In dieser Figur ist nur der schematische Reaktor und nicht die gesamte Vorrichtung mit Vorwärmer etc. dargestellt. Hauptvorteil dieser Ausführungsform ist, daß auch lange Schlauch- oder Rohrware ohne hohe Druckstufen (die evtl. entstehenden Gase müssen in ihrem Volumen stark zurückgedrängt werden, um einen gleichmäßigen Contibetrieb zu gewährleisten) als Reaktor verwendet werden können. Die Menge der Gassammler hängt vom Reaktor ab.

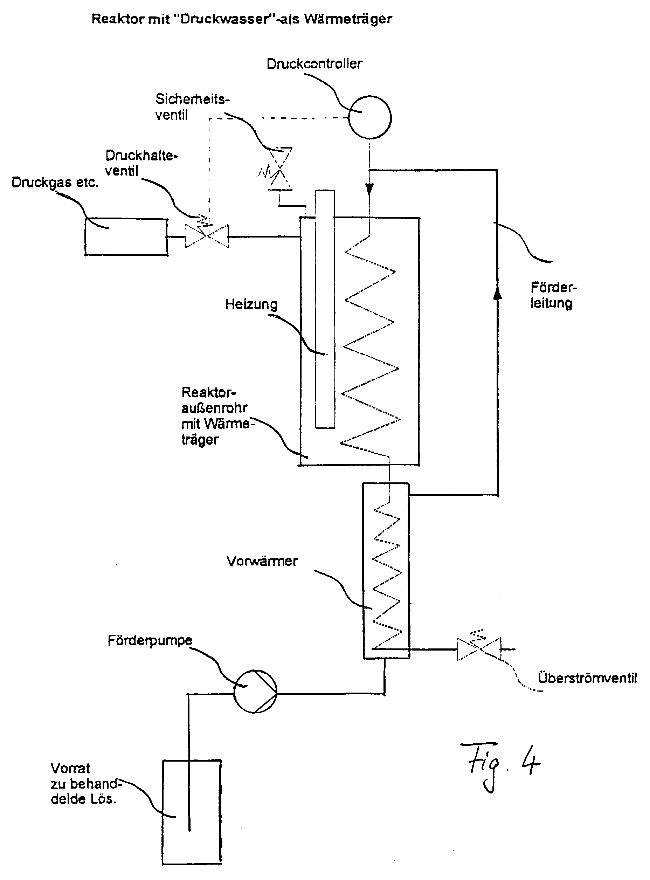

Bei der in Figur 4 gezeigten Vorrichtung können auch sehr dünnwandige Reaktorrohre z.B. aus PFA; PTFE etc. verwendet werden. Wenn der Druck im "Druckwasser" und im Reaktorinnenrohr gleichgehalten wird. Das Reaktorausßenrohr kann in sehr günstigen Werkstoffen ausgeführt sein. Es sind nur noch der Vorwärmer und die Leitung vom Vorwärmer in den Reaktor aus korrosionsfesten (teuren) Werkstoffen auszuführen. Diese schematische Darstellung kann natürlich in Form und Heizungsart variieren. Ebenso kann man anstatt "Druckwasser" einen anderen druckbeaufschlagten Wärmeträger benutzen.

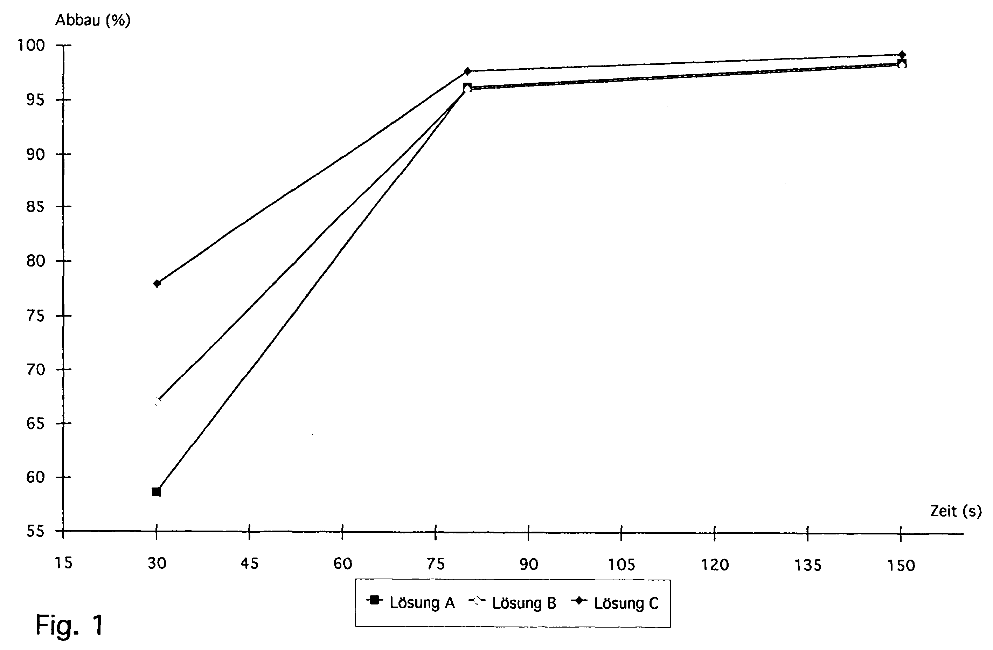

Im folgenden wird die Erfindung anhand von Beispielen und der Figur 1 im einzelnen erläutert.

### Anwendungsbeispiele

### Beispiel 1

In diesem Beispiel wurden die Abbauraten für TOC, AOX und Farbstoffe miteinander verglichen bei konstantem Persulfateinsatz und in Abhängigkeit von der Verweildauer im Reaktor.

In einem Laborrohrreaktor, der aus einem zu einer Wendel gebogenen 6 m langen Rohr mit einem Innendurchmesser von 4 mm bestand wurden mit einer Kolbenmembranpumpe verschiedene synthetisch hergestellte Schadstofflösungen durchgefördert.

Das beheizte Innenvolumen des Reaktors betrug 75 ml. Die Rohrwendel befand sich in einem Ölbadthermostaten, der auf 135 °C geheizt wurde. Nach dem Ölbad wurde der Inhalt des Rohres mit einer Wasserkühlung auf Zimmertemperatur abgekühlt. Um einen kontinuierlichen gleichbleibenden Druck im Reaktor zu erhalten, war ein voreinstellbares Überströmventil am Rohrende installiert.

Der Druck des Reaktors wurde zwischen 8 - 9 bar gehalten.

### Lösungskonzentrationen:

### Lösung A:

500 mg/l Phenol (TOC 383 mg/l) in wässriger Lösung und 23,8 g/l Natriumpersulfat mit NaOH alkalisch gestellt

### Lösung B:

500 mg/l Tetrachlorphtalsäureanhydrid in wässriger Lösung und 23,8 g/l Natriumpersulfat mit NaOH alkalisch gestellt

### Lösung C:

50 mg/l Farbstoff Solanthrene Green Microperle MIX 7154 in wässriger Lösung und 2,4 g/l Natriumpersulfat mit NaOH alkalisch gestellt

Die Lösungen wurden angesetzt und mit drei verschiedenen Verweilzeiten durch den Reaktor gefördert.

### 30 sec. Verweilzeit (Förderleistung 9 l/h)

### Lösung A:

TOC-Reduzierung auf 158 mg/l = 58,7 6 Abbau

### Lösung B:

167 mg/l als anorganisches Chlorid nachgewiesen = 67,1 % Abbau

### Lösung C:

VIS-Messung der Färbung = 78 % Abbau

### 80 sec. Verweilzeit (Förderleistung 3,38 l/h)

### Lösung A:

TOC-Reduzierung auf 14 mg/l = 96,3 % Abbau

### Lösung B:

239 mg/l als anorganisches Chlorid nachgewiesen = 96,1 % Abbau

### Lösung C:

VIS-Messung der Färbung = 97,8 % Abbau

### 150 sec. Verweilzeit (Förderleistung 1,8 l/h)

### Lösung A:

TOC-Reduzierung auf 5 mg/l = 98,7 % Abbau

### Lösung B:

245 mg/l als anorganisches Chlorid nachgewiesen = 98,5 % Abbau

### Lösung C:

VIS-Messung der Färbung = 99,5 % Abbau

Aus den dargestellten Werten ergibt sich, daß nach dem erfindungsgemäßen Verfahren die TOC-Werte bereits nahezu auf 0 gefallen sind, d.h. ein annähernd 100 %-iger Abbau der Schadstoffe stattgefunden hat. Dasselbe gilt für den Abbau von AOX; der 98,5 %-ige Abbau bei 150 sec. Verweilzeit des Tetrachlorphtalsäureanhydrids bedeutet einen AOX-Wert von weniger als 0,3 mg/l. Ebenso hat ein fast 100 %-iger Abbau von Farbstoffen, hier insbesondere dem Solanthrene Green Microperle MIX 7154, stattgefunden. Dieser Farbstoff gehört zu der Kategorie Küpenfarbstoffe, welche mit den bereits bekannten Verfahren wie z.B. H₂O₂/UV nur sehr schwer abbaubar sind.

Die Umsatzleistung ist in beigefügten Fig. 1 zusammenfassend dargestellt.

### Beispiel 2

In diesem Beispiel wird die Abbaurate von AOX und TOC im sauren Milieu bei konstantem Persulfateinsatz und in Abhängigkeit von der Verweildauer im Reaktor aufgezeigt.

In einem Laborreaktor, bestehend aus einem senkrecht stehenden emailierten DN 25 Rohrstück mit Heizmantel und einem aufgeflanschten 5 cm langen DN 15 Kopfteil, wurde über eine vorgeheizte Rohrstrecke mit einer Kolbenmembranpumpe chlorphenolhaltige, mit Persulfat versetzte Lösung mit verschiedenen Durchflußraten gefördert.

Das Rohr war im beheizten Bereich mit Raschigringen gefüllt. Zur Vorerwärmung der Lösung war zwischen Dosierpumpe und Reaktorteil ein Rohrstück in einem Ölbadthermostaten mit 110 °C abgetaucht. Das Innenvolumen des Reaktors betrug 93 ml. Die Zu- und Ableitungen des Reaktors hatten einen Rohrinnendurchmesser von 4 mm. Am unteren Austritt-der Lösung war zur Kühlung ein Rohrstück in einem Wasserbad abgetaucht. Am Ende dieses Rohrstücks befand sich ein Überströmventil, das auf 6 bar eingestellt wurde. Zur Temperaturkontrolle war ein Thermoelement im unteren Drittel des Reaktors installiert. Um einen gleichmäßigen Reaktorfüllstand halten zu können, waren in einem am Reaktorkopf angeflanschten 5 cm langen DN 15 Rohrstück zwei konduktive Grenzstandmelder und ein Nadelventil oberhalb des oberen Sensors eingebaut. Bei Meldung einer Gasphase durch den unteren Sensor wurde vorsichtig das Nadelventil geöffnet bis der obere Sensor gerade durch Flüssigkeit benetzt wurde und anschließend das Nadelventil wieder geschlossen.

### Versuchsbedingungen:

Temperatur im Reaktor: 130-135 °C
Durchflüsse: 20-75 ml/min
Druck: 5-6 bar

### Ausgangslösung:

Eine Lösung mit 500 mg/l 2-Chlorphenol wurde mit 23,8 g/l Natriumpersulfat versetzt.

| Durchflußrate | Verweilzeit Reaktor | TOC | AOX |
|---|---|---|---|
| Ausgangslösung | | 260 mg/l | 129 mg/l |
| 75 ml/min | 75 sec | 52 mg/l | 22 mg/l |
| 40 ml/min | 139 sec | <5 mg/l | 0,9 mg/l |
| 20 ml/min | 279 sec | <5 mg/l | 0,3 mg/l |

Diese Ergebnisse zeigen, dass, wie in Beispiel 1, trotz des sauren Milieus der auslaufenden Lösung, TOC und AOX beinahe vollständig in kurzer Zeit abgebaut werden.

### Beispiel 3

In diesem Beispiel wird veranschaulicht, daß nicht nur synthetische Farblösungen, sondern auch Industrieabwässer einfach und schnell entfärbt werden können. Desweiteren wird in diesem Beispiel die positive Wirkung von Persulfat/H₂O₂-Mischungen als aktive Komponente aufgezeigt.

In dem in Beispiel 2 beschriebenen Laborreaktor wurde ein Abwasser aus einer Färbereiflotte mit Persulfat zur Reaktion gebracht. Das Abwasser enthielt ungefähr 0,5-1 g/l Lewafix-Farbstoff und farbflottenübliche Komponenten, wie Natriumsulfat, Netzer, etc.

### Versuchsbedingungen:

Temperatur im Reaktor: 130-134 °C
Reaktordurchfluß: 42 ml/min (132 sec Verweilzeit im Reaktor)
Reaktordruck: 4,6-5,7 bar
pH-Wert Einlauf: 10,7

Die Tabelle zeigt die Analysen der durch den Reaktor gefahrenen Lösungen:

| Aktive Komponente | TOC-Wert | pH-Wert Auslauf | Farbbeurteilung |
|---|---|---|---|
| 0) Eingesetzte Lösung | 487 mg/l | 10,7 | tief dunkelblau undurchsichtig |
| 1) 1 g/l Na-Persulfat | 401 mg/l | 9,9 | tief dunkelrot durchsichtig |
| 2) 6 g/l Na-Persulfat | 315 mg/l | 6,7 | orange durchsichtig |
| 3) 12 g/l Na-Persulfat | 225 mg/l | 2,6 | fahlgrün durchsichtig |
| 4) 24 g/l Na-Persulfat | 21 mg/l | 1,85 | farblos durchsichtig |
| 5) 3 g/l Na-Persulfat | 351 mg/l | 8,8 | backsteinrot durchsichtig |
| 6) 3 g/l Na-Persulfat + 0,4 g/l H₂O₂ | 317 mg/l | 7,8 | orange durchsichtig |
| 7) 3 g/l Na-Persulfat + 0,8 g/l H₂O₂ | 324 mg/l | 7,9 | orange durchsichtig |
| 8) 3,4 g/l H₂O₂ | 421 mg/l | 10,1 | tiefdunkelrot durchsichtig |

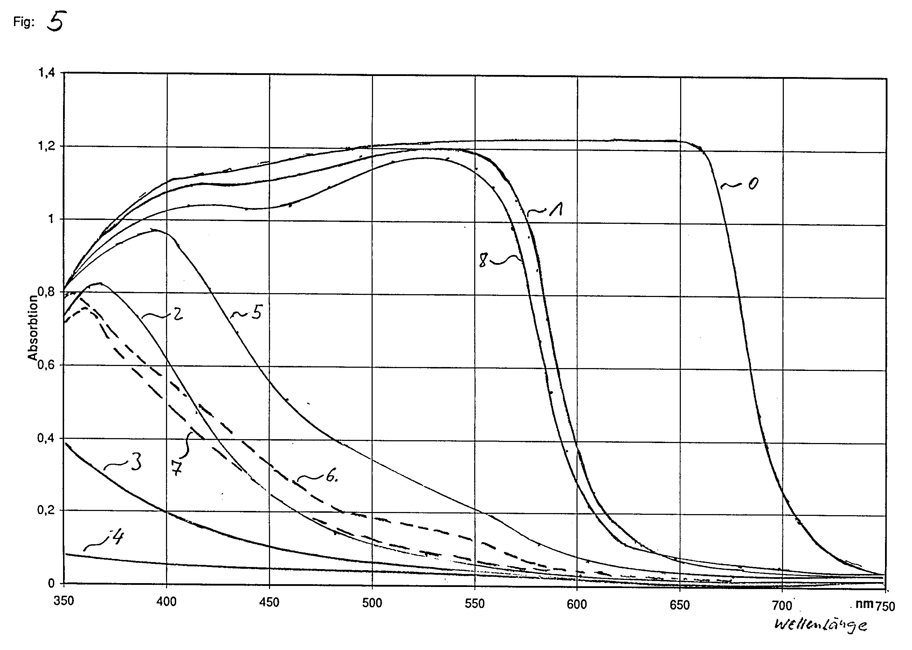

Um sich nicht nur auf die augenscheinlichen Farbbeurteilungen zu verlassen, werden die Farbmessungen durch die VIS-Spektren in Figur 5 belegt.

Die Nummern der einzelnen Kurven entsprechen den obigen Versuchsnummern. Die dargestellten Absorptionsspektren wurden mit einem Spektralphotometer im sichtabren Bereich von 350 - 750 nm aufgezeichnet.

Deutlich ist die starke Farbabnahme bereits bei Einsatz von 3 g/l Na-Persulfat (Kurve 5) zu erkennen. Der Einsatz von 3,4 g/l H₂O₂ (Kurve 8) bringt kaum Entfärbungseffekte. Mischungen aus Na-Persulfat und H₂O₂ bringen bis zu einer gewissen H₂O₂-Konzentration positive Effekte (Kurven 6 und 7). Beim Einsatz von 24 g/l Na-Persulfat war die Lösung total entfärbt.

Die Versuche zeigen, daß durch Persulfat eine rasche und wirkungsvolle Entfärbung des Farbabwassers gegeben war. Durch Einsatz von Persulfat/H₂O₂-Mischungen konnte bis zu einem Molverhältnis von etwa 1:1 (3 g/l Persulfat/0,4 g/l H₂O₂) eine Steigerung des TOC-Abbaus sowie des Farbabbaus erreicht werden, wobei die gemessenen Werte etwa dem Einsatz von 6 g/l Na-Persulfat entsprechen, höhere H₂O₂-Zugaben hatten keinen positiven Effekt. Der Einsatz von reinen H₂O₂-Lösungen als aktive Komponente auch in höheren Dosierungen ergab nur eine geringe TOC- und Farbreduzierung.

### Beispiel 4

Das Beispiel 4 dient einem Vergleich des Abbaus von TOC und AOX bei verschiedenen Persulfatkonzentrationen und einer Verweildauer von 80 sec.

Zwei Bündelwärmetauscher mit je 25 innenliegenden DN 15 Rohren (Innenvolumen des Reaktors 4,4 l) wurden miteinander verschraubt und vertikal aufgestellt. Der untere Wärmetauscher diente dabei als Vorwärmer für das zu behandelnde Abwasser (im Mantel) und gleichzeitig als Kühler für das behandelte Abwasser (Innenrohre). Der obere Wärmetauscher wurde als Reaktor verwendet, wobei Thermöl als Wärmeträger für die Mantelbeheizung diente. Oberhalb des Reaktors wurde eine Rohrgefäß mit einem Volumen von ca. 12 l verschraubt. Auf halber Höhe des Rohrgefäßes war eine mit Teflon isolierte 2-Stabsonde als konduktiver Grenzstandsensor ins Gefäßinnere geführt. Auf dem Rohrgefäß war ein voreinstellbares Sicherheitsventil und parallel dazu ein Überströmventil mit nachgeschaltetem Magnetventil angebracht. Zusätzlich wurde ein Drucksensor in diesem Rohrgefäß verschraubt. Am Boden des unteren Wärmetauschers war nach einer Reduzierung ein Überstromventil mit nachgeschaltetem Magnetventil angebracht. Das Abwasser wurde mit einer Membranpumpe erst durch den Mantel des unteren Wärmetauschers und anschließend in das Rohrgefäß gepumpt. Es durchlief den Reaktor und gelangte nach den Abkühlphase über das unten gelegene Überströmventil in atmosphärische Bedingungen. Alle Teile waren vollständig mit Steinwolle isoliert.

### Versuchsparameter:

| | |
|---|---|
| Reaktordruck: | 5-6 bar |
| Fördervolumen: | ca. 200 l/h |
| Reaktorverweilzeit: | 80 sec. |
| Temperatur Einlauf Vorwärmer: | 23 °C |
| Temperatur Mitte Reaktor: | Ø 140 °C |
| Temperatur nach Abkühlphase: | 54 °C |

Abwasser aus einer physikalisch/chemischen Behandlung für Ölspaltanlagen mit einem

| | |
|---|---|
| TOC-Wert: | 2278 mg/l |
| AOX-Wert: | 0,9 mg/l |
| anorganisches Chlorid: | 0,2 g/l |

bei einem pH-Wert von 11,2 wurde als wässrige Lösung eingesetzt.

Nach der Aufheizphase des Systems konnte es mit einem Energieeintrag von 37 KWh/m³ Abwasser betrieben werden.

Die Konzentration an Persulfat wurde stufenweise erhöht und jeweils der Schadstoffabbau kontrolliert.

| Eingesetztes Persulfat | TOC | AOX |
|---|---|---|
| 6 g/l | 2102 mg/l | 0,8 mg/l |
| 12 g/l | 2056 mg/l | 0,4 mg/l |
| 24 g/l | 1692 mg/l | 0,2 mg/l |

Das Beispiel belegt die Abhängigkeit der Verringerung der TOC- bzw. AOX- Werte, sprich, des Abbaus von Schadstoffen von der Menge des eingesetzten Persulfats.

Der AOX-Wert verringert sich im vorliegenden Fall linear zu der eingesetzten Menge Persulfat. AOX- und TOC-Werte sind bei 24 g/l eingesetztem Persulfat bei einer Verweildauer von nur 80 sec. bereits auf sehr niedrige Werte abgefallen.

### Beispiel 5

Beispiel 5 belegt die Möglichkeit, den pH-Wert konstant im alkalischen, bis schwach alkalischen Bereich zu halten und dadurch die Reaktionsgeschwindigkeit weiter zu erhöhen.

Bei der Apparatur aus Beispiel 2 wurde der Reaktorteil (oberer Bündelwärmetauscher) durch ein beheizbares Rohrstück ersetzt und dieses mit Keramikraschigringen gefüllt. Am Endauslauf des Abwassers wurde eine pH-Meß- und Regeleinrichtung mit integriertem PID-Regler installiert. Durch diese pH-Einrichtung wurden vier Membrandosierpumpen (Laugenförderung) über das Analog-Ausgangssignal des PID-Reglers angesteuert. Die erste Pumpe wurde nach der Hauptförderpumpe angeschlossen, die zweite Pumpe dosierte in den Reaktorkopf (Rohrgefäß), die dritte Pumpe dosierte ca. 30 cm unterhalb der Reaktoroberkante in den Reaktor und die vierte Pumpe dosierte ca. 60 cm unterhalb der Reaktoroberkante in den Reaktor. Der Sollwert des Abwasserauslaufs wurde auf pH 7,5 gesetzt und die Dosierpumpen auf gleiches Fördervolumen gestellt. Die Pumpleistung erhöhte sich proportional dem Analogsignal.

### Versuchparameter

| | |
|---|---|
| Volumen des Reaktors: | 8,4 l |
| Reaktordruck: | 6 - 8 bar |
| Volumenstrom: | 260 l/h |
| Reaktorverweilzeit: | 116 sec. |
| Temperatur Ende Reaktor: | 136 °C |
| Temperatur nach Abkühlphase: | 41 °C |
| Konzentration der zu dosierenden Natronlauge-Konzentration: | 5 Mol/l |

Die eingesetzte wässrige Lösung war Abwasser, nämlich Deponiesickerwasser mit

| | |
|---|---|
| TOC-Wert: | 301 mg/l |
| AOX-Wert: | 4,7 mg/l |
| Nickel: (komplexgebunden) | 3,4 mg/l |
| anorganisches Chlorid: | 8,7 g/l |

bei einem pH-Wert von 9,3.

Die Persulfat-Konzentration wurde stufenweise erhöht und der Schadstoffabbau jeweils kontrolliert.

### Ergebnisse

| Eingesetztes Persulfat g/l | TOC mg/l | AOX mg/l | Ni mg/l nach Sulfidfällung | pH-Wert Auslauf | Laugenverbrauch Itr/m³ Abw. |
|---|---|---|---|---|---|
| 1 | 265 | 2,7 | 2,10 | 7,8 | 1,55 |
| 6 | 236 | 0,8 | 0,85 | 7,7 | 9,30 |
| 12 | 149 | 0,2 | 0,45 | 7,9 | 19,80 |
| 24 | 57 | 0,1 | 0,06 | 7,7 | 39,5 |

Durch die stufenweise Neutralisation der sich aus dem Persulfat bildenden Schwefelsäure mit den vier Laugenzudosierungen wird eine Arbeitsweise im schwach alkalischen Bereich realisiert. Dadurch wird nochmals eine Erhöhung der Reaktionsgeschwindigkeit erreicht, ohne daß eine AOX-Neubildung stattfindet.

Durch das vorliegende Verfahren ist es also möglich, Schadstoffe in Abwässern, Prozeßflüssigkeiten und Trinkwasser durch Persulfat abzubauen, wobei die Verweilzeiten der jeweiligen wässrigen Lösung im Reaktionssystem sehr gering sind und die Reaktion in jedem gewünschten pH-Bereich durchgeführt werden kann. Durch die kurzen Verweilzeiten kann Zeit gespart werden und die verwendeten Behälter und Apparaturen können kleiner als gewöhnlich ausgeführt werden, was wiederum zu einer erheblichen Einsparung beim Material führt, da dieses aufgrund des aggressiven Reaktionsmilieu sehr widerstandsfähig - also teuer - sein muß. Mit dem erfindungsgemäßen Verfahren werden nicht nur die TOC-Werte reduziert, sondern es werden sämtliche Schadstoffe, auch die stark toxischen, komplett abgebaut.

## Patentansprüche

1. Verfahren zum Abbau von Schadstoffen in Abwässern, Prozeßlösungen und Trinkwasser unter Verwendung von Persulfat,
**dadurch gekennzeichnet,**
daß der Abbau bei mindestens 130 °C, vorzugweise 130 bis 140 °C und einem Druck größer als 1 bar durchgeführt wird.

2. Verfahren nach Anspruch 1,
**dadurch gekennzeichnet,**
daß als aktive Oxidationskomponente ein Peroxodisulfat eingesetzt wird.

3. Verfahren nach Anspruch 1,
**dadurch gekennzeichnet,**
daß als aktive Oxidationskomponente ein Peroxomonosulfat eingesetzt wird.

4. Verfahren nach Anspruch 1,
**dadurch gekennzeichnet,**
daß als aktive Oxidationskomponente eine Mischung aus Peroxodisulfat mit Wasserstoffperoxid, vorzugsweise in einem molaren Verhältnis von 0,1 bis 2,0 Mol Wasserstoffperoxid je Mol Peroxodisulfat, eingesetzt wird.

5. Verfahren nach Anspruch 4,
**dadurch gekennzeichnet,**
daß das Wasserstoffperoxid in Form von Natriumcarbonat-Peroxohydrat eingebracht wird.

6. Verfahren nach Anspruch 1,
**dadurch gekennzeichnet,**
daß als aktive Oxidationskomponente eine Mischung aus Peroxodisulfat oder Peroxomonosulfat mit Percarbonaten und/oder Perboraten eingesetzt wird.

7. Verfahren nach einem oder mehreren der vorhergehenden Ansprüche,
**dadurch gekennzeichnet,**
daß 2 bis 3 Mol Persulfat pro abzubauendem Mol C bzw. CH₂ eingesetzt werden.

8. Verfahren nach einem oder mehreren der vorhergehenden Ansprüche,
**dadurch gekennzeichnet,**
daß die Konzentration des Persulfats 20 bis 30 g/l beträgt.

9. Verfahren nach einem oder mehreren der vorhergehenden Ansprüche,
**dadurch gekennzeichnet,**
daß die wäßrige Lösung zwischen 30 und 500 sec. im Reaktor verweilt.

10. Verfahren nach einem der oder mehreren der vorhergehenden Ansprüche,
**dadurch gekennzeichnet,**
daß die wäßrige Lösung zwischen 80 und 300 sec. im Reaktor verweilt.

11. Verfahren nach einem oder mehreren der vorhergehenden Ansprüche,
**dadurch gekennzeichnet,**
daß die wäßrige Lösung 100 sec. im Reaktor verweilt.

12. Verfahren nach einem oder mehreren der vorhergehenden Ansprüche,
**dadurch gekennzeichnet,**
daß die Reaktion bei einem Überdruck von 5 bis 6 bar abläuft.

13. Verfahren nach einem oder mehreren der vorhergehenden Ansprüche,
**dadurch gekennzeichnet,**
daß eine oder mehrere pH-Wert-abhängige Laugenzudosierungen für das einlaufende Abwasser vorgesehen sind.

14. Verfahren nach Anspruch 13,
**dadurch gekennzeichnet,**
daß der pH-Wert durch die Laugenzudosierung bei pH 7 bis 9 gehalten wird.

15. Verfahren nach Anspruch 13 oder 14,
**dadurch gekennzeichnet,**
daß als Laugen die Hydroxide, Carbonate und/oder Hydrogencarbonate des Natriums oder Kaliums eingesetzt werden.

16. Verfahren nach Anspruch 13 oder 14,
**dadurch gekennzeichnet,**
daß als Lauge Kalkmilch verwendet wird.

17. Verfahren nach einem oder mehreren der vorhergehenden Ansprüche,
**dadurch gekennzeichnet,**
daß zusätzlich Katalysatoren zugesetzt werden.

18. Verfahren nach Anspruch 17,
**dadurch gekennzeichnet,**
daß als Katalysatoren Zusätze oder Festbettschüttungen von Kohle- oder Graphitpulver bzw. -granulat eingesetzt werden.

19. Verfahren nach Anspruch 17,
**dadurch gekennzeichnet,**
daß als Katalysatoren Zusätze oder Festbettschüttungen von Adsorberharzen verwendet werden.

20. Verfahren nach Anspruch 17,
**dadurch gekennzeichnet,**
daß als Katalysator Übergangsmetalle verwendet werden.

21. Verfahren nach einem der Ansprüche 17 bis 20,
**dadurch gekennzeichnet,**
daß die Katalysatoren an Aktivkohle fixiert sind.

22. Verfahren nach einem oder mehreren der vorhergehenden Ansprüche,
**dadurch gekennzeichnet,**
daß zusätzlich eine Bestrahlung mit UV-Licht, Mikrowelle oder Ultraschall vorgesehen ist.

23. Vorrichtung zur Durchführung des Verfahrens nach einem der Ansprüche 1 bis 22, umfassend eine Einrichtung zum Abbau von Verunreinigungen in wässrigen Lösungen mittels Persulfat, mit einem ersten Behälterteil zur Aufnahme der wässrigen Lösung, welcher einen Einlauf und einen Auslauf aufweist und einen Reaktionsraum bildet, wobei eine Heizvorrichtung zum Beheizen der wässrigen Lösung vorgesehen ist,
wobei weiter Wärmeübergangsmittel vorgesehen sind, die einen Wärmeübergang zwischen der Heizvorrichtung und der wässrigen Lösung gestatten,
und wobei wenigstens ein Druckerzeugungsmittel vorgesehen ist.

24. Vorrichtung nach Anspruch 23,
**dadurch gekennzeichnet,**
daß die Heizvorrichtung eine Widerstandsheizung umfaßt.

25. Vorrichtung nach Anspruch 23,
**dadurch gekennzeichnet,**
daß die Heizvorrichtung Wärmeträger wie Dampf, Abwärme, z.B. heiße Gase oder organische Wärmeträger umfaßt.

26. Vorrichtung nach einem der vorhergehenden Ansprüche,
**dadurch gekennzeichnet,**
daß ein zweiter Behälterteil zur Aufnahme des Wärmeträgers vorgesehen ist, wobei der erste Trägerteil wenigstens teilweise in dem zweiten Trägerteil verläuft.

27. Vorrichtung nach einem der vorhergehenden Ansprüche,
**dadurch gekennzeichnet,**
daß der erste Behälterteil als Druckbehälterteil ausgebildet ist.

28. Vorrichtung nach einem der vorhergehenden Ansprüche,
**dadurch gekennzeichnet,**
daß der zweite Behälterteil als Druckbehälterteil ausgebildet ist.

29. Vorrichtung nach einem der vorhergehenden Ansprüche,
**dadurch gekennzeichnet,**
daß die Einrichtung ein Conti-Reaktortyp ist.

30. Vorrichtung nach einem der vorhergehenden Ansprüche,
**dadurch gekennzeichnet,**
daß Wärmeaustauschmittel zum Wärmeaustausch zwischen dem einlaufenden Abwasser und dem auslaufende Abwasser vorgesehen sind.

31. Vorrichtung nach Anspruch 30,
**dadurch gekennzeichnet,**
daß die Wärmeaustauschmittel als Gegenstromaustauschmittel ausgebildet sind.

32. Vorrichtung nach einem der vorhergehenden Ansprüche,
**dadurch gekennzeichnet,**
daß in dem Reaktionsraum Wärmeübergangsmittel vorgesehen sind.

33. Vorrichtung nach einem der vorhergehenden Ansrüche 32,
**dadurch gekennzeichnet,**
daß die Wärmeübergangsmittel mit Mitteln versehen sind, die eine vertikale Quervermischung verhindern.

34. Vorrichtung nach einem der vorhergehenden Ansrüche 32 und 33,
**dadurch gekennzeichnet,**
daß die Wärmeübergangsmittel entstehende Gase im Reaktionsraum nach oben entweichen lassen.

35. Vorrichtung nach einem der vorhergehenden Ansprüche,
**dadurch gekennzeichnet,**
daß die Wärmeübergangsmittel als gerade Rohre, Rohrschlangen oder Platten ausgebildet sind.

36. Vorrichtung nach einem der vorhergehenden Ansprüche,
**dadurch gekennzeichnet,**
die Wärmeübergangsmittel eine einfache Schüttung mit keramischen Raschigringen ist.

37. Vorrichtung nach einem der vorhergehenden Ansprüche,
**dadurch gekennzeichnet,**
daß die Wärmeaustauschmittel die Wärmeübergangsmittel sind.

38. Vorrichtung nach einem der vorhergehenden Ansprüche,
**dadurch gekennzeichnet,**
daß vor dem Auslauf wenigstens ein einstellbares Überstromventilmittel vorgesehen ist, das als Druckerzeugungsmittel wirkt.

39. Vorrichtung nach einem der vorhergehenden Ansprüche,
**dadurch gekennzeichnet,**
daß wenigsten ein einstellbares Gasüberströmventilmittel vorgesehen ist, das ein ableiten von Gasen aus dem oberen Teil des Behälterteils erlaubt.

40. Vorrichtung nach einem der vorhergehenden Ansprüche,
**dadurch gekennzeichnet,**
daß wenigstens ein Grenzstandsdetektor im oberen Teil des Behälterteils vorgesehen ist.

41. Vorrichtung nach Anspruch 40,
**dadurch gekennzeichnet,**
daß der wenigstens eine Grenzstandsdetektor wenigstens ein Ventilmittel betätigt.

42. Vorrichtung nach einem der Ansprüche 38 bis 41,
**dadurch gekennzeichnet,**
daß der Grenzstandsdetektor das Überströmventilmittel und/oder das Gasüberströmventilmittel in abhängigkeit einer detektierten Gasphase und/oder einer detektierten Flüssigkeitsphase in dem Behälterteil steuert.

43. Vorrichtung nach einem der vorhergehenden Ansprüche,
**dadurch gekennzeichnet,**
daß an dem Behälterteil wenigstens eine Persulfatdosiereinrichtung vorgesehen ist.

44. Vorrichtung nach einem der vorhergehenden Ansprüche,
**dadurch gekennzeichnet,**
daß an dem Behälterteil wenigstens eine Laugenzudosiereinrichtung vorgesehen ist.

45. Vorrichtung nach einem der vorhergehenden Ansprüche,
**dadurch gekennzeichnet,**
daß die wenigstens eine Laugenzudosiereinrichtung abhängig von wenigstens einem gemessenen pH-Wert arbeitet.

46. Vorrichtung nach einem der vorhergehenden Ansprüche,
**dadurch gekennzeichnet,**
daß Isolationsmittel z.B. aus Steinwolle vorgesehen sind, die wenigstens Teile der Einrichtung isolieren.

47. Vorrichtung nach einem der vorhergehenden Ansprüche,
**dadurch gekennzeichnet,**
daß der Behälterteil im Kontaktbereich mit der wässrigen Lösung mit Schutzmitteln versehen ist.

48. Vorrichtung nach einem der vorhergehenden Ansprüche,
**dadurch gekennzeichnet,**
daß der Behälterteil und die Apparaturen aus säurebeständigem Material bestehen.

49. Vorrichtung nach einem der vorhergehenden Ansprüche,
**dadurch gekennzeichnet,**
daß die Schutzmittel aus Teflon sind.

50. Vorrichtung nach einem der vorhergehenden Ansprüche,
**dadurch gekennzeichnet,**
daß der zweite Behälterteil mit Druckerzeugungsmitteln versehen sind.

51. Vorrichtung nach einem der vorhergehenden Ansprüche,
**dadurch gekennzeichnet,**
daß eine Pumpenvorrichtung zum Fördern der wässrigen Lösungen vorgesehen ist.

52. Vorrichtung nach einem der vorhergehenden Ansprüche,
**dadurch gekennzeichnet,**
daß Kondensatablaufmittel vorgesehen sind.

53. Vorrichtung nach einem der vorhergehenden Ansprüche,
**dadurch gekennzeichnet,**
daß an dem Behälterteil Gassammler vorgesehen sind, die mit den Gasüberströmventilmitteln in Verbindung stehen.

54. Vorrichtung nach einem der vorhergehenden Ansprüche,
**dadurch gekennzeichnet,**
daß der Behälterteil aus PFA oder PTFE etc. besteht.
